# EUROPEAN PATENT APPLICATION

(11) **EP 3 275 921 A1**
(43) Date of publication of application: **31.01.2018**
(21) Application number: 16305970.2
(22) Date of filing: 27.07.2016
(51) Int. Cl.: C08J 5/24, B29B 15/12, B29C 70/52

(54) **IMPREGNATED PREPREG COMPRISING REINFORCING FIBERS**

(71) Applicant: Toray Carbon Fibers Europe, 64170 Lacq (FR)
(72) Inventor: GELI, Maurice, 64230 LESCAR (FR); BUZARRE, Yann, 64110 GELOS (FR); KARAKI, Takuya, EHIME, 791-3120 (JP); TAKETA, Ichiro, 64000 PAU (FR)
(74) Representative: Lavoix

(57) **Abstract**

The invention relates to a process and apparatus for producing a tape-shaped prepreg comprising reinforcing fibers and a thermoset resin, said process comprising:
(i) a fiber bundle introduction step (1) that arranges tape-shaped reinforcing fiber bundles (10), each comprising a plurality of reinforcing fibers (10), and introducing the tape-shaped reinforcing fiber bundles (10) into a first die or first set of die (19) comprising a supply of a thermoset resin (23);
(ii) a fiber bundle thickness reduction step (2);
(iii) a resin impregnation step (3) that impregnates said spread tape-shaped reinforcing fiber bundle (31) by said thermoset resin (23), the viscosity of which being preferably in the range of 1 to 300 Pa·s;
(iv) a lamination step (4) that laminates a plurality of tape-shaped reinforcing fiber bundles; and
(v) a fixing step (5) to form a tape-shaped prepreg.

The invention relates to a tape-shaped prepregs and manufactured articles formed by a tape-shaped prepreg.

## Description

### TECHNICAL FIELD

This invention relates to an apparatus and a process for producing a tape-shaped prepreg and, specifically, to an apparatus and a process for producing a tape-shaped prepreg using reinforcing fibers into which a resin is extremely uniformly impregnated. The present invention also relates to prepregs made according to the process of the present invention and applications thereof.

### Background

Fiber reinforced plastics (FRP) are composed of reinforcing fibers and a matrix resin. Such FRP are known because of their high specific strength and modulus, superior mechanical properties and high durability against exposure to environment, chemical and so on and their demand increases year by year especially in industrial applications.

Typical molding method to obtain FRP with high performances comprises the manufacturing of uncured or semi-cured prepregs which are typically made by impregnating reinforcing fibers with a matrix resin, typically a thermoset resin. FRP are prepared by laminating prepregs and then curing the matrix by pressurizing and heating with autoclave.

Generally speaking, prepreg is for example about 1 m width and complex shape are difficult to produce from such prepregs during lamination. Therefore to avoid difficulties of wide-sheet prepregs, tape-shaped prepregs with narrow width are used for forming complex shapes. Since tape-shaped prepregs can follow any geometry just by draping in the thickness direction, 3D geometry laid-up of several tape-shaped prepregs side by side can be performed with programmed or automated robotic arms. For example, the patent application WO2013163639A1 discloses slit tape prepregs made by cutting a wide-sheet prepreg in fiber direction to separate into a plurality of narrow width prepregs. However multiple steps for reducing prepregs width by cutting prepregs to make narrower prepregs are required, resulting in high cost for manufacturing the prepregs.

The Japanese patent JP3635773 (WO 2013/163639) discloses yarn prepregs made by dipping reinforcing fiber bundles into a liquid resin. The yarn prepregs cost less than slit tap prepregs because of the use of bundles having a narrow width instead of performing additional cut of prepregs. However, this way of manufacturing yarn prepregs is not suitable for high-performance applications like aerospace applications. While the reinforcing fiber bundle is directly impregnated with a matrix resin in short time, its volume fraction of fiber is below 45%, which impacts the strength and modulus of FRP. Also high molecular weight resin which can typically enhance toughness of the matrix of FRP cannot perfectly impregnate the reinforcing fibers due to its high viscosity. This aspect is critical for aerospace applications and applications requiring a similar level of properties for FRP.

### Aims of the invention

Accordingly, in view of the above-described technical problems, it would be helpful to produce a high-performance tape-shaped prepreg at a high productivity.

The present invention aims to provide prepregs with one or more of high mechanical properties, high specific strength, high modulus, high durability against exposure to environment, high durability against exposure to chemicals, and to response to the increasing demand especially in industrial applications.

The present invention aims to provide prepregs with short manufacturing time.

The present invention aims to provide prepregs with resin matrix having a high viscosity.

The present invention aims to provide prepregs while avoiding multiple steps in the manufacturing process.

The present invention aims to provide prepregs with narrow width, and in particular to provide tape-shaped prepregs.

The present invention aims to provide prepregs according to an industrial manufacturing process.

Preferably, the invention aims to provide prepregs having satisfying several and preferably all aims described above.

### Summary

The present invention relates to a process for producing a tape-shaped prepreg comprising reinforcing fibers and a thermoset resin wherein the volume fraction of said reinforced fiber is in the range of 45 to 65%, said process comprising:
(i) a fiber bundle introduction step 1 that arranges tape-shaped reinforcing fiber bundles 10, each comprising a plurality of reinforcing fibers 10, wherein the tape-shaped reinforcing fiber bundles are arranged not to touch each other, while running each of said tape-shaped reinforcing fiber bundles, preferably continuously, and introducing the tape-shaped reinforcing fiber bundles 10 into a first die or first set of die 19 comprising a supply of a thermoset resin 23;
(ii) a fiber bundle thickness reduction step 2 that widens each of said tape-shaped reinforcing fiber bundles 10 by spreading to reduce the thickness of each tape-shaped reinforcing fiber bundle 10 to provide spread tape-shaped reinforcing fiber bundles 31, before and/or after said introduction step 1;
(iii) a resin impregnation step 3 that impregnates said spread tape-shaped reinforcing fiber bundle 31 by said thermoset resin 23, the viscosity of which being preferably in the range of 1 to 300 Pa·s.;
(iv) a lamination step 4 that laminates a plurality of tape-shaped reinforcing fiber bundles, which has not been touched each other until said lamination step, which have been or have to be impregnated by said thermoset resin, in said first die or first set of dies 19, to form an impregnated tape-shaped laminate; and
(v) a fixing step 5 that fixes the width of the impregnated tape-shaped laminate by a second die 41 placed at the end of said first die or first set of dies 19, to form a tape-shaped prepreg.

Prepreg is a well-known technical term. Prepregs designate in particular preimpregnated fibers composites where the fibers are embedded in one or more impregnating components.

One typical impregnating components is a thermoset resin means a resin that reacts when exposed to heat and/or yield a crosslinked network that does not flow and does not lend itself to easy remolding. The resin may comprise co-reactants that form part of the network although the co-reactants by themselves may not be thermosets.

The term "uncured prepreg" designates a prepreg wherein the impregnating component is not cured.

The term "semi-cured prepreg" designates a prepreg wherein the impregnating component is only partially cured.

The term "tape-shape prepreg" designates a prepregs having a tape shape. A skilled person is able to distinguish tape-shaped prepregs from other shapes and in particular from sheet-shaped prepregs. A tape-shape prepregs has typically a width inferior to a sheet-shaped prepreg. In one embodiment, a tape-shaped prepreg has a width of less than 50 cm, preferably less than 20 cm. Usually tape-shaped prepregs have a width of 0.1 to 10 cm. In one embodiment, the tape-shaped prepregs have a width of 1 to 50 mm.

The length of prepregs is not limited and typically can range from 1 to 3000 m.

The thickness of tape-shaped prepregs is not limited as soon as it retains the tape shape. In one embodiment, a tape-shaped prepreg has a thickness of 10 to 1000 micrometers (µm), preferably of 50 to 500 micrometers (µm). Usually tape-shaped prepregs have a thickness of 50 to 400 micrometers (µm). In one embodiment, the tape-shaped prepregs have a thickness of 100 to 400 micrometers (µm), for example of 200 micrometers (µm).

Tape-shaped reinforcing fiber bundles according to the invention advantageously comprise continuous fiber bundles. "Continuous" means that the fiber bundles are ideally continuous or are discontinuous but with an infinite length in comparison to other dimensions of the fiber bundle. In one embodiment, continuous means that the fiber bundles have a length of more than 10 m, preferably of more than 50m, and even more preferably of more than 100m.

The term "first die" refers to a single die or to a set of several dies.

The term "second die" refers to a single die or to a set of several dies.

The first die and second die can be the same, similar or different types of dies.

A set of dies may comprise the same, similar or different types of dies.

The present invention also relates to an apparatus for producing a tape-shaped prepreg comprising reinforcing fibers and a thermoset resin wherein the volume fraction of said reinforced fiber is in the range of 45 to 65%, said apparatus comprising:
introducing means 11 for introducing a plurality of tape-shaped reinforcing fiber bundles 10 into a first die 19,
one or more spreading means 13 for spreading said plurality of tape-shaped reinforcing fiber bundles 10,
a first die or set of dies 19 for laminating said plurality of tape-shaped reinforcing fibers, said first die or set of dies 19 comprising a resin supply for contacting said plurality of tape-shaped reinforcing fibers and a thermoset resin 23 having a viscosity in the range of 1 to 300 Pa·s,
said spreading means 13 being arrange to spread said plurality of tape-shaped reinforcing fiber bundles 10 before and/or after said first die or set of dies 19,
separating means 32,33 for separating said tape-shaped reinforcing fiber bundles and arranging said tape-shaped reinforcing fiber bundles not to touch each other until they reach said resin supply, said separating means 32,33 being arranged to introduce said tape-shaped reinforcing fiber bundles into said first die or first set of die 19,
a second die or set of dies 41 fixing the width of the impregnated tape-shaped laminate, said second die or set of dies 41 being placed at the end of or after said first die or first set of dies 19, to form a tape-shaped prepreg, and
a tape-shaped prepreg comprising a plurality of reinforcing fiber bundles uniformly continuously impregnated by said thermoset resin.

Also, the present invention relates to an apparatus for producing a tape-shaped prepreg comprising reinforcing fibers and a thermoset resin wherein the volume fraction of said reinforced fiber is in the range of 45 to 65%, said apparatus comprising:
creels 11 comprising a plurality of tape-shaped reinforcing fiber bundles 10,
one or more spreading rolls 13 for spreading said plurality of tape-shaped reinforcing fiber bundles 10,
a first die or set of dies 19 for laminating said plurality of tape-shaped reinforcing fibers, said first die or set of dies 19 comprising a resin supply for contacting said plurality of tape-shaped reinforcing fibers and a thermoset resin 23 having a viscosity in the range of 1 to 300 Pa.s,
said spreading rolls 13 being arrange to spread said plurality of tape-shaped reinforcing fiber bundles 10 before and/or after said first die or set of dies 19,
a guide 32, 33 for separating said tape-shaped reinforcing fiber bundles and arranging said tape-shaped reinforcing fiber bundles not to touch each other until they reach said resin supply, said guide being arranged to introduce said tape-shaped reinforcing fiber bundles into said first die or first set of die 19,
a second die or set of dies 41 fixing the width of the impregnated tape-shaped laminate, said second die or set of dies 41 being placed at the end of or after said first die or first set of dies (19), to form a tape-shaped prepreg, and
a tape-shaped prepreg comprising a plurality of reinforcing fiber bundles uniformly continuously impregnated by said thermoset resin.

The present invention also relates to a tape-shaped prepreg comprising a plurality of reinforcing fiber bundles, and uncured or semi-cured thermoset resin, wherein said thermoset resin has a viscosity in the range of 1 to 300 Pa.s before curing, wherein the volume fraction of said reinforced fiber is in the range of 45 to 65% relative to the total volume of the prepreg, and wherein said reinforcing fiber bundles are totally impregnated by said thermoset resin, preferably said tape-shaped prepreg being obtainable according to a process as defined according to the present invention.

The present invention also relates to a manufactured article formed by a tape-shaped prepreg as defined according to the present invention.

### Brief description of the drawings

FIG. 1 is a schematic diagram showing an example of a_process and apparatus for producing a tape-shaped prepreg according to the present invention.
FIG. 2 is a schematic cross-sectional view of a tape-shaped reinforcing fiber bundle showing an example of widening by spreading in a process for producing a tape-shaped prepreg according to the present invention.
FIG. 3 depicts a schematic site view showing an example of spreading in a spreader of the apparatus shown in FIG. 1.
FIG. 4 is a schematic cross-sectional view of a die showing an example of introduction into the first die and lamination in the first die of tape-shaped reinforcing fiber bundles in a process for producing a tape-shaped prepreg.
FIG. 5 is a schematic longitudinal view of a die showing an example (according to fig 4) of introduction into the first die and lamination in the die of tape-shaped reinforcing fiber bundles in a process for producing a tape-shaped prepreg.
FIG. 6 is a schematic cross-sectional view of a first die showing another example of introduction into the first die and lamination in the die of tape-shaped reinforcing fiber bundles in a process for producing a tape-shaped prepreg.
FIG. 7 is a schematic side view of the second die with cavity.
FIG 8 is a schematic of magnified top view of around the cavity of the second die according to fig. 7.
FIG 9 is a schematic of magnified side view of around the cavity of the second die according to fig. 7.

### Explanation of symbols

100 : whole of the apparatus for producing a tape-shaped prepreg
1: a fiber bundle introduction step (a fiber bundle introduction step)
2: a fiber bundle thickness reduction step (a fiber bundle thickness reduction means)
3: a resin impregnation step (a resin impregnation means)
4: a lamination step (a lamination means)
5: a fixing step (a fixing means)
10: a plurality of reinforcing fiber bundles (tape-shaped reinforcing fiber bundles)
11: creels
12: a spreader
13: spreading rolls
19: a first die
23: thermoset resin
30: a plurality of continuous reinforcing fibers
31: a widened tape-shaped reinforcing fiber bundle
32: guide bars
33: guide bars
41: a second die
42: a cavity
43: a round corner
51: a driving station
61: a winder

### Detailed description

One technical advantage of the tape-shaped prepregs according to the invention is their use for high-performance application, like aerospace.

### Reinforcing fibers

The kind of the reinforcing fibers is not particularly limited. Any reinforcing fibers such as carbon fiber, glass fiber or aramid fiber can be used, and a hybrid structure combining these fibers can also be employed.

In particular, carbon fibers are preferred, especially in case where the mechanical properties of a final molded product such as strength are desired to be increased.

In particular, PAN-base, pitch-base, rayon-base, carbon fibers or any mixture thereof can be exemplified among commonly used carbon fibers. From the viewpoint of the balance between the strength and the elastic modulus of a molded article to be obtained, PAN-base carbon fibers are preferred.

Very often, the carbon fibers which constitute the carbon fiber bundle have a sizing agent to bundle the carbon fibers.

In a preferred embodiment, the density of carbon fibers is preferably in a range of 1.65 to 1.95 g/cm³, and more preferably in a range of 1.70 to 1.85 g/cm³. If the density is too high, the lightness in weight of the resulting composite material comprising the fibers, for example a carbon fiber-reinforced plastic, is poor, and if too low, the mechanical properties of the composite material may become low.

Typically, the diameter of a fiber and in particular of carbon fibers is of 1 to 30 micrometers, and more usually from 5 to 10 micrometers.

In one preferred embodiment, carbon fiber bundles are 1K, 2K, 3K, 6K, 9K, 12K, 24K or 48K carbon fiber bundles.

Typically, carbon fiber bundles are provided as carbon fiber tows.

Among carbon fibers, carbon fibers having a high strength which hardly generate fuzz in the fiber bundle thickness reduction step or the resin impregnation step, are further preferred. Advantageously, carbon fibers having a tensile strength of 4,500 MPa or more, and more preferably of 5,000 MPa or more, are preferred.

### Resins

A thermoset resin is advantageously used as resin impregnating the reinforcing fibers.

The kind of thermoset resin used is not particularly limited.

In one embodiment, the thermoset resin is selected from the group consisting of epoxy resins, unsaturated polyester resins, vinyl ester resins, phenol resins, epoxy acrylate resins, urethane resins, and any mixtures thereof. Preferably, an epoxy resin is used as thermoset resin. Using an epoxy resin exhibits excellent reinforcement effects.

In one embodiment, the thermoset resin is a resin with high viscosity. Resin viscosity is determined by rotating viscometer equipped with parallel plate (40mm diameter, 1 mm gap) and a temperature increase at a ramp rate of 2°C/min, and oscillation frequency at 0.5Hz.

Advantageously, the thermoset resin has a viscosity in the range of 1 to 300 Pa.s. In the case the viscosity of the resin is more than 300 Pa.s, it is difficult impregnate the reinforcing fibers, resulting in low productivity of manufacturing tape-shaped prepreg.

### Prepregs

Advantageously, according to the invention, the reinforcing fibers bundles are uniformly impregnated by a thermoset resin.

Advantageously, according to the invention, the tape-shaped prepreg is a high-grade having uniform properties along the full length of the prepreg.

Moreover, in one embodiment, preferably to respond to required properties of the molded product to be obtained, the prepreg may comprise one or more of flame retardant, weather resistance improvement agent, antioxidant, thermal stabilizer, ultraviolet absorbent, plasticizer, lubricant, colorant, compatibilizer, conductive filler, etc. and any mixture thereof.

Advantageously, the arrangement of the reinforcing fibers in the prepreg is preferably performed according to uniform and good condition, since the thickness of the tape-shaped reinforcing fiber bundle can be easily maintained uniform at the reduction step 2, which is spreading and widening each tape-shaped reinforcing fiber bundle. In particular, the thickness of the tape-shaped reinforcing fiber bundle can be easily maintained uniform at the reduction step 2 before resin impregnation step 3. Advantageously the continuous reinforcing fibers are arranged uniformly in the prepreg.

In one embodiment, prepregs have a width of 1 to 10 mm, for example of 5 to 7 mm. advantageously, prepregs have a standard deviation of their width lower than 0.2, and preferably lower than 0.15.

In one embodiment, the reinforcing fiber bundles in the prepregs are totally impregnated by said thermoset resin. This prepreg has preferably a uniform thickness. Uniform thickness may be evaluated for example by the standard deviation (SD) of the volume fraction of fiber Vf in the prepreg ( noted SD(Vf) here), preferably, SD(Vf) is lower than 1%, preferably lower than 0.5%, even more preferably lower than 0.2 %. An example of said preferred SD(Vf) value is 0.1%.

In one embodiment, prepregs have volume fraction of fiber Vf in the prepreg of 45 to 65, for example of 48 to 62.

### Process for producing the tape-shaped prepreg

### Step 1

In one embodiment, tape-shaped reinforcing fiber bundle, arranged not to touch each other, are formed by providing a gap between adjacent tape-shaped reinforcing fiber bundles (10), said gap being preferably in the thickness direction of each tape-shaped reinforcing fiber bundle (10)before and/or after said introduction step (1)

Since the tape-shaped prepreg has a narrow width, arranging a tape-shaped reinforcing bundle in thickness direction is helpful to form final or near final shape of the tape-shaped prepreg. In the case the width of the tape-shaped prepreg is wider than that of the tape-shaped reinforcing fiber bundle, said tape-shaped reinforcing fiber bundles, arranged not to be touched each other, are formed by adjoining tape-shaped reinforcing fiber bundles to one another in the width direction of each tape-shaped reinforcing fiber bundle, before and/or after said introduction step (1).

### Step 2

In the process according to the invention for producing the tape-shaped prepreg, the tape-shaped reinforcing fiber bundle comprising continuous reinforcing fibers is spread and widened at one or both of stages before and after the introduction into the die, using means of spreading such as air, ironing or vibration at the stage before the introduction and using means of spreading such as ironing at the stage after the introduction, and whereby the thickness of each tape-shaped reinforcing fiber bundle is reduced.

### Step 3

In on embodiment of the process according to the invention, said tape-shaped reinforcing fiber bundles that do not to touch each other are formed by providing a gap between adjacent tape-shaped reinforcing fiber bundles. Advantageously, the reinforcing fiber bundles are impregnated by the thermoset resin and an adequate gap between the respective tape-shaped reinforcing fiber bundles is maintained at one, several and preferably all steps until the resin impregnates each reinforcing fiber bundles. Preferably, the reinforcing fiber bundles are totally impregnated by said thermoset resin. Very advantageously, by maintaining a gap between the respective tape-shaped reinforcing fiber bundles until the resin impregnates each reinforcing fiber bundles, the reinforcing fiber bundles are totally impregnated by said thermoset resin more easily, i.e. on all surfaces. Therefore, a desired uniform impregnation is completed in a short period of time, and the productivity is further improved.

In the case where a thermoset resin having a relatively high viscosity is used, the impregnating distance is reduced as the viscosity of the resin increases to be capable of impregnating the resin sufficiently and satisfactorily in a short period of time. A thermoset resin having a relatively high viscosity is typically a thermoset resin having a viscosity up to 300 Pa.s and typically more than 10 Pa.s.

In one preferred embodiment, the thickness of each of the plurality of tape-shaped reinforcing fiber bundles is reduced before impregnating the respective tape-shaped reinforcing fiber bundles by said thermoset resin in the die. Since each tape-shaped reinforcing fiber bundle is formed as a tape-like material having a small thickness (smaller than the original reinforcing fiber bundle), the thermoset resin easily impregnates each tape-shaped reinforcing fiber bundle by a small layer in the thickness direction of said bundles (impregnation distance) and, therefore, a uniform impregnation is performed along the reinforcing fiber bundles according to the thickness direction in a short period of time.

### Step 4

In one embodiment, in said lamination step 4, a plurality of spread tape-shaped reinforcing fiber bundles 31 impregnated or/and to be impregnated with said thermoset resin 23 are laminated sequentially at positions different from each other in said running direction of said tape-shaped reinforcing fiber bundles 31.

In such a lamination step 4, it becomes possible to improve the dimensional accuracy of the tape-shaped prepreg.

In one embodiment, a plurality of tape-shaped reinforcing fiber bundles, already impregnated or to be impregnated by said thermoset resin, is laminated in the thickness direction of the bundle in the same die, and a tape-shaped laminate is formed. Such a thickness is adapted to a target thickness of the final tape-shape prepreg. Advantageously, since the time required for resin impregnation for each tape-shaped reinforcing fiber bundle may be short, the prepreg can be manufactured in a short time, which can be estimated by only summing up the time required for the resin impregnation and the time required for the lamination when successively performed in the same die. The productivity can be remarkably enhanced from the viewpoint of the time for production.

In one embodiment, in said lamination step 4, a plurality of spread tape-shaped reinforcing fiber bundles 31 impregnated or/and to be impregnated with said thermoset resin 23 are laminated simultaneously at a predetermined position in said running direction of said tape-shaped reinforcing fiber bundles 31. In such a manner, it may become possible to shorten the length of the die. In addition, this presents a lower risk to touch the tape-shaped fiber bundle each other and thus contributes to reduce fuzz generation, so that the productivity can be increased.

In one embodiment, said predetermined position is disposed just before or at said fixing step 5. In such manner, it may become possible to shorten the length of the die.

### Step 5

In one embodiment, a fixing step 5 is set after said lamination step 3 and the width of said impregnated tape-shaped laminate is fixed through said second die 41. In such manner, accurate shape of the tape-shaped prepreg is formed.

In a preferred embodiment, the corner 43 of inlet of said cavity 42 is rounded. It can effectively reduce friction between the second die and the tape-shaped laminate, resulting in less risk to generate fuzz at the cavity 42 and leading to increase productivity. Accordingly, in the apparatus of the invention, said second die or set of dies 41 comprises a cavity 42 for running impregnated tape-shaped laminate into said cavity 42, said cavity 42 having one or more parts or corners 43 possibly in contact with said impregnated tape-shaped laminate that are not angular, and preferably that are round.

In one embodiment, the temperature of said first die or first set of dies 19 is different from that of said second die 41.

In one embodiment, the temperature of said first die or first set of dies 19 is lower than that of said second die 41, This may reduce the resin viscosity and thereby the resistance passing through the cavity 42 can be reduced. Thus may also partially cure (semi-cure) the tape-shaped prepreg during passing the cavity 42 to help fixing its final shape.

In one embodiment, the temperature of said first die or first set of dies 19 is higher than that of said second die 41. This may help fixing its final shape due to increase resin viscosity to size reinforcing fiber.

Advantageously, the second die or second set of dies 41 comprises a cavity 42 the thickness of is smaller than that of said impregnated and laminated reinforcing bundles 31 at the end of said first die of set of dies 19. In such manner, not only width but also thickness of the tape-shaped prepreg can be fixed with accuracy.

In one embodiment, said thickness of said cavity 42 divided by the number of laminated tape-shaped reinforcing fiber bundles 31 is less than 0.3mm. In such a manner, the thickness of each tape-shaped reinforcing fiber bundle is thin enough to be impregnated in the thickness direction, so that perfect impregnation is ensured.

In one embodiment, in the above-described die process and apparatus, the respective tape-shaped reinforcing fiber bundles are spread in a defined order or/and respective tape-shaped reinforcing fiber bundles already impregnated by the thermoset resin are laminated in a defined order, using a plurality of fixed guides (for example, squeeze bars) arranged in a running direction of the tape-shaped reinforcing fiber bundles. Advantageously, a tunnel for tape-shaped reinforcing fiber bundles is provided to each of at least a part of the plurality of fixed guides and at least a part of tape-shaped reinforcing fiber bundles are run through the tunnels. In one embodiment, the plurality of fixed guides are used for the spreading or/and the lamination. It is preferred to use a fixed guide not requiring a large space for the spreading or/and the lamination in the die, and by arranging a plurality of fixed guides in the running direction of the tape-shaped reinforcing fiber bundles, it becomes possible to spread respective tape-shaped reinforcing fiber bundles in a defined order or/and laminate respective tape-shaped reinforcing fiber bundles already impregnated by the thermoset resin in a defined order.

Hereinafter, desirable examples will be explained referring to the drawings.

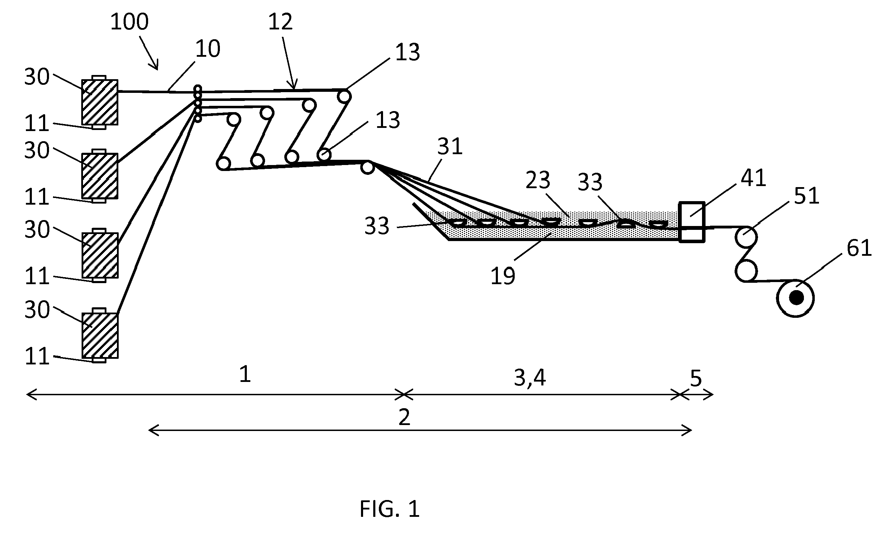

FIG. 1 shows a process for producing a tape-shaped prepreg according to an example, wherein symbol 100 indicates the whole of the apparatus for producing a tape-shaped prepreg. In this example, a fiber bundle introduction step (a fiber bundle introduction means) 1, a fiber bundle thickness reduction step (a fiber bundle thickness reduction means) 2, a resin impregnation step (a resin impregnation means) 3, a lamination step (a lamination means) 4, and a fixing step (a fixing means) 5 are provided. A plurality of reinforcing fiber bundles (tape-shaped reinforcing fiber bundles) 10, each comprising a plurality of continuous reinforcing fibers 30, are pulled out from respective creels 11, and sent to a spreader 12 provided as an example of a fiber bundle thickness reduction means for reducing the thickness of each fiber bundle by widening due to spreading. The spreader 12 may be one having an oven and accompanying heating, and alternatively, may comprise directly heating spreading rolls 13. In the spreader 12, for example, the respective tape-shaped reinforcing fiber bundles 10 having been introduced are spread by a plurality of spreading rolls 13, etc. (or bars for spreading), they are widened by means of the spreading and the thickness of each tape-shaped reinforcing fiber bundle 10 is reduced.

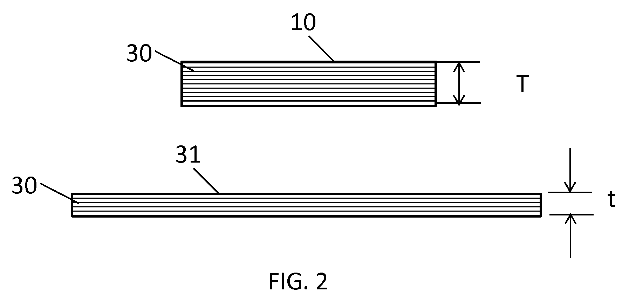

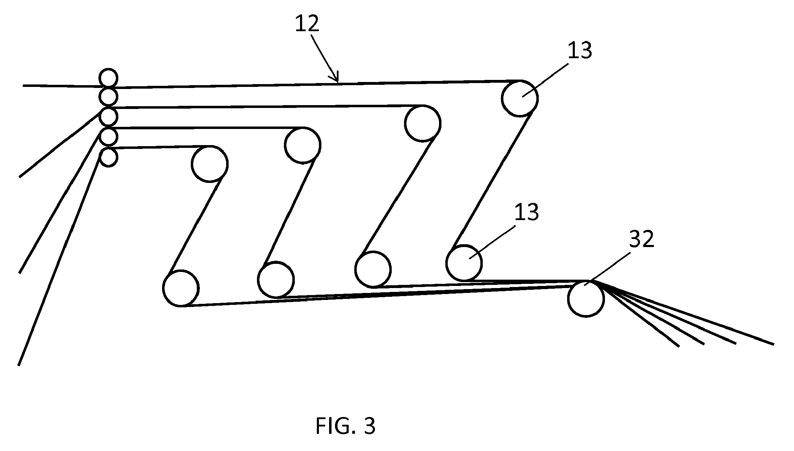

This spreading and widening is carried out, for example, in a manner such as an example shown in FIG. 2, an initial thickness T of the tape-shaped reinforcing fiber bundle comprising the continuous reinforcing fibers 30 is reduced down to a thickness t by spreading and widening to achieve a formation of a thin widened tape-shaped reinforcing fiber bundle 31. In the case where the width of a tape-shaped prepreg to be produced finally is greater than the width of this widened tape-shaped reinforcing fiber bundle 31, tape-shaped reinforcing fiber bundles may be adjoined in the width direction by a necessary number at the stage of the tape-shaped reinforcing fiber bundle 10 or at the stage of tape-shaped reinforcing fiber bundle 31. For example, as shown in FIG. 3, a plurality of tape-shaped reinforcing fiber bundles 10 having been run in parallel are widened by spreading rolls 13 at positions different from one another shifted in the running direction of the tape-shaped reinforcing fiber bundles 10, the plurality of widened tape-shaped reinforcing fiber bundles 10 are adjoined in the width direction so that they don't contact each other and don't cause any fuzz which will be cause of defects inside a tape-shaped prepreg. Although not shown in FIG. 2, it is possible to perform such widening and adjoining in the width direction also in a die according to the invention.

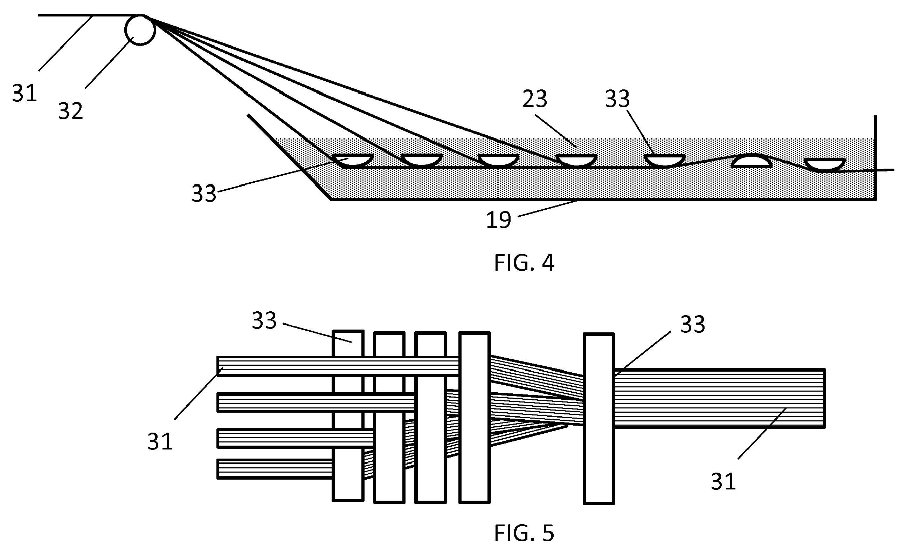

The tape-shaped reinforcing fiber bundles 31 each having been reduced in thickness by spreading and widening are introduced into a first die 19 for resin impregnation. In example shown in FIG. 4 and 5, the tape-shaped reinforcing fiber bundles 31, being reduced in thickness by the above-described spreading and widening, are introduced into the first die 19 supplied with the thermoset resin 23, with an adequate gap in thickness direction between each of the tape-shaped reinforcing fiber bundles 31 and some overlap in width direction between adjacent tape-shaped reinforcing fiber bundles 31. In the example shown in FIG. 4 and 5, guide bars 33 for guiding respective tape-shaped reinforcing fiber bundles 31 are arranged at positions immediately after the introduction into the first die 19 to maintain the gaps in thickness direction and the overlaps in width direction. Although respective tape-shaped reinforcing fiber bundles 31 having passed through the guide bars 32 are approached to each other to be laminated, because a gap between adjacent tape-shaped reinforcing fiber bundles 31 is kept from the positions immediately after the introduction into the first die 19 up to the lamination position, each of the respective tape-shaped reinforcing fiber bundles 31 reduced in thickness is impregnated with the thermoset resin 23 from both surface sides before lamination. An overlap between adjacent tape-shaped reinforcing fiber bundles 31 enables forming a tape-shaped prepreg without significant distortions of fibers and generating fuzz which may be caused by large frictions between guide bars 33 and the fibers.

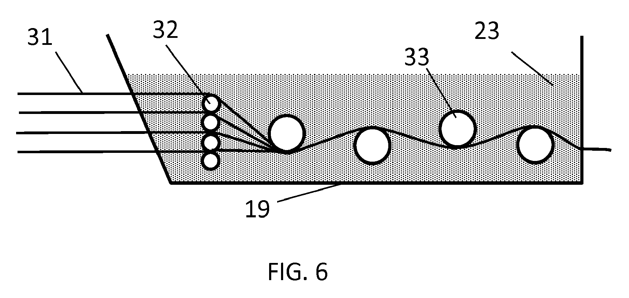

Respective tape-shaped reinforcing fiber bundles 31 impregnated with the thermoset resin 23 are laminated in the same first die 19. This lamination can be carried out by an appropriate arbitrary method, and in the example shown in FIG. 4 and 5, it is performed such that a plurality of fixed guides 33 (squeeze bars) each having a semi-circular surface are arranged in the running direction of tape-shaped reinforcing fiber bundles 31 so that the circular surfaces come into contact with the tape-shaped reinforcing fiber bundles 31 alternately at positions opposite to each other, and the plurality of the stacked tape-shaped reinforcing fiber bundles 31 are passed in a defined order through the respective fixed guides 33. By bringing tape-shaped reinforcing fiber bundles 31, to be impregnated by the thermoset resin 23 or already impregnated by the thermoset resin 23, into contact as well as passing them through the fixed guides having such circular surfaces, narrow gaps are formed between the tape-shaped reinforcing fiber bundles 31 and the surfaces of the fixed guides immediately before the contact, and because in these gaps the resin pressure is gradually increased toward the sides of the tape-shaped reinforcing fiber bundles 31, the resin impregnation into the tape-shaped reinforcing fiber bundles 31 is accelerated or supplemented. Namely, on the fixed guides, the acceleration or supplement of resin impregnation as well as the above-described lamination are possible. Further, it is also possible to reduce the thickness of the fiber bundle in the first die 19 using such fixed guides. The reduction of the thickness of the fiber bundle due to the spreading and widening of the tape-shaped reinforcing fiber bundle can be carried out before and/or after the introduction into the first die, and for the tape-shaped reinforcing fiber bundles 31 reduced in thickness, the resin impregnation in the first die 19 and the lamination of the tape-shaped reinforcing fiber bundles 31 impregnated by the resin may be performed. Although the fixed guides (squeeze bars) can be any of those having a columnar surface as shown for example in FIG. 6, which is another example of impregnation die and bars, and those having a semi-circular surface as shown for example in FIG. 4, to limit even suppress a risk of exothermic fire of the thermoset resin 23 as less as possible in the first die 19, it is preferred to introduce a minimal amount of the thermoset resin 23 in the first die 19. From such a viewpoint, it is considered to be a preferred embodiment to use fixed guides each having a semi-circular surface not requiring a large space and capable of making the thermoset resin 23 capacity of said first die 19 minimum.

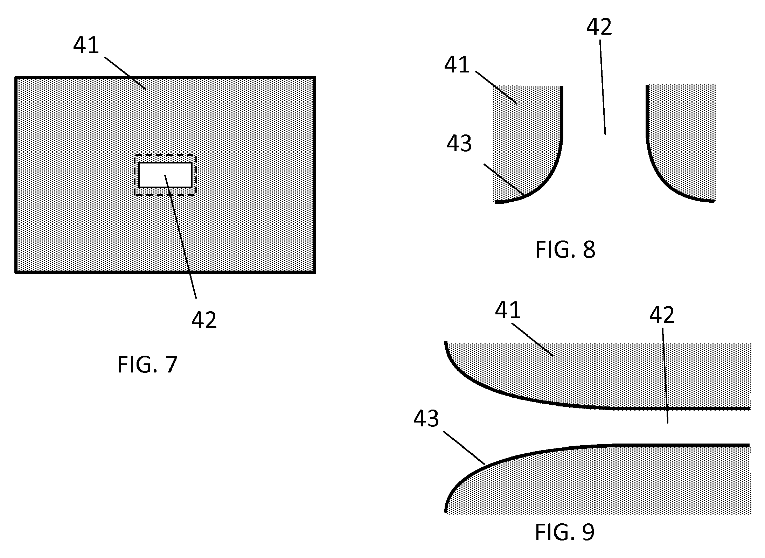

Laminated tape-shaped reinforcing fiber bundles 31 impregnated by the thermoset resin 23 are formed as a tape-like shape as its whole shape is pulled from the die and the width of the tape-shaped prepreg is fixed by the end of the first die 19 or through the second die 41 set at the end of the first die 19. As shown in FIG 7, 8 and 9, the second die 41 has a cavity 42 and the cavity 42 has a width which is smaller than the width of the impregnated and laminated bundles and the fixed width of tap-shaped laminate as well. Such cavity dimensions allow the excess of resin of the laminated bundles to be squeezed out from the laminated bundles and the desirable tape-shape prepreg can be obtained. The cavity 42 has a round corner 43 at its inlet faces and the round corner 43 can be fed with the laminated tape-shape prepreg smoothly and make the process stable. The width of the cavity 42 can be designed to be smaller than the width of laminated bundles so that the excess of resin of the laminated bundles is removed. The height of cavity 42 can be also designed to be smaller than the height of laminated bundles so that the excess of resin of the laminated bundles is removed.

The tape-shaped prepreg is drawn for example by driving station 51 and is winded for example by winder 61. The driving station can be selected from any equipment known in the art as long as it has a function to draw the tape-shaped prepreg. Winder 61 can be also selected from any equipment known in the art as long as it has a function to wind said tape-shaped prepreg.

The present invention relates to a prepreg obtainable by a process as defined by the present invention.

### Industrial Applications of the Invention

The process for producing a tape-shaped prepreg can be applied to production of any tape-shaped prepreg using reinforcing fibers and a thermoset resin. A tape-shaped prepreg obtained from such process can be suitably used for transportation equipment such as automobiles, airplanes or ships, etc., and structural components and sub-structural components for leisure and sport equipment parts, pressure vessels, structural oil field excavation or civil engineering and architecture machines and materials, etc.

Accordingly, the present invention also relates to transportation equipment such as automobiles, airplanes or ships, etc., structural components and sub-structural components for leisure and sport equipment parts, pressure vessels, structural oil field excavation or civil engineering and architecture machines and materials, manufactured with a tape-shaped prepreg as defined by the present invention.

### Examples

### Example 1, 2 and 3:

As referring to FIG.1, two bobbins of commercial fiber tow was selected (T700SC-12K-50C; Toray Carbon Fiber Europe) are set to the creels 11 and the tape-shaped reinforcing fiber bundles are individually pulled out and spread with rolls 13. These bundles are separately immersed into resin in the die 19 not to touch each other and stacked at guide bar 33 set at the exit of the die 19, where equipped the other die with cavity of which inlet is rounded as shown in FIG. 8 and 9. The cavity 42 is designed as 6.5mm width and 0.28mm thickness. Then the laminated bundle is pulled out through the cavity at a certain speed which is controlled by driving station 51 and collected with winder 61. The die is filled with uncured epoxy resin of which dynamic viscosity is 1 Pa.s at 107°C, 10 Pa.s at 77°C and 300 Pa.s at 50°C. Melt viscosities were measured with a dynamic viscoelasticity measuring apparatus (Rotating viscometer equipped with parallel plate: DHR manufactured by TA Instruments, as measured on (40mm diameter, 1 mm gap) and a temperature increase at a ramp rate of 2°C/min, and oscillation frequency at 0.5Hz). For Example 1, line speed is set to 0.5m/min and resin is conditioned at 50°C. For Example 2, line speed is set to 5m/min and resin is conditioned at 77°C. For Example 3, line speed is set to 15m/min and resin is conditioned at 107°C. In all cases, the tape-shaped prepreg is continuously collected for 10min without any critical trouble such as bundle breakage and fuzz accumulation on the surface. Collected tape-shaped prepreg is evaluated with width every 50cm in length measured by micrometer, volume fraction of fiber Vf calculated by weighing in 10cm length of the tape-shaped prepreg and impregnation level observed by cutting cross-section of the tape-shaped prepreg. The width and Vf is averaged for 10 points and their standard deviation SD are also calculated. The conditions and results are summarized in Table 1.

For Examples 1-3, width and Vf are quite stable and fully impregnated thanks to above mentioned process.

### Comparative example 1, 2 and 3:

In the same manner as Example 1-3, two bobbins of the same kind of carbon fiber are set to the creels and the tape-shaped reinforcing fiber bundles are pulled out, stacked into laminate, then immersed into resin in a die filled with the same resin as Example 1-3. Immediately after crossing guide rolls in the die, the tape-shaped prepreg is pulled out from the die by driving station and collected with winder. For Comparative Example 1, line speed is set to 0.5m/min and resin is conditioned at 50°C. For Comparative Example 2, line speed is set to 5m/min and resin is conditioned at 77°C. For Comparative Example 3, line speed is set to 15m/min and resin is conditioned at 107°C. In all cases, the tape-shaped prepreg is continuously collected for 10min without any critical trouble such as bundle breakage and fuzz accumulation on the surface. Collected tape-shaped prepreg is evaluated with width, Vf and impregnation level in the same manner as Example 1-3. The conditions and results are summarized in Table 1.

For Comparative Examples 1-3, width and Vf cannot be controlled and they include a big scatter. Moreover, the resin impregnation level is poor compared to Example 1-3.

**Table 1 Conditions and results for examples and comparative examples**

| | Line speed [m/min] | Temperature [°C] | Viscosity [Pa·s] | Width [mm] | SD [mm] | Vf [%] | SD [%] | Impregnation level |
|---|---|---|---|---|---|---|---|---|
| Example 1 | 0.5 | 50 | 300 | 6.5 | 0.1 | 50 | 0.1 | Full |
| Example 2 | 5 | 77 | 10 | 6.5 | 0.1 | 50 | 0.1 | Full |
| Example 3 | 15 | 107 | 1 | 6.5 | 0.1 | 50 | 0.1 | Full |
| Comparative example 1 | 0.5 | 50 | 300 | 8.4 | 0.6 | 40 | 2 | Large dry area |
| Comparative example 2 | 5 | 77 | 10 | 8.2 | 0.4 | 42 | 4 | Partially dry area |
| Comparative example 3 | 15 | 107 | 1 | 7.8 | 0.3 | 44 | 1 | Partially dry area |

## Claims

1. A process for producing a tape-shaped prepreg comprising reinforcing fibers and a thermoset resin wherein the volume fraction of said reinforced fiber is in the range of 45 to 65%, said process comprising:
(i) a fiber bundle introduction step (1) that arranges tape-shaped reinforcing fiber bundles (10), each comprising a plurality of reinforcing fibers (10), wherein the tape-shaped reinforcing fiber bundles are arranged not to touch each other, while running each of said tape-shaped reinforcing fiber bundles, preferably continuously, and introducing the tape-shaped reinforcing fiber bundles (10) into a first die or first set of die (19) comprising a supply of a thermoset resin (23);
(ii) a fiber bundle thickness reduction step (2) that widens each of said tape-shaped reinforcing fiber bundles (10) by spreading to reduce the thickness of each tape-shaped reinforcing fiber bundle (10) to provide spread tape-shaped reinforcing fiber bundles (31), before and/or after said introduction step (1);
(iii) a resin impregnation step (3) that impregnates said spread tape-shaped reinforcing fiber bundle (31) by said thermoset resin (23), the viscosity of which being preferably in the range of 1 to 300 Pa·s;
(iv) a lamination step (4) that laminates a plurality of tape-shaped reinforcing fiber bundles, which has not been touched each other until said lamination step, which have been or have to be impregnated by said thermoset resin, in said first die or first set of dies (19), to form an impregnated tape-shaped laminate; and
(v) a fixing step (5) that fixes the width of the impregnated tape-shaped laminate by a second die (41) placed at the end of said first die or first set of dies (19), to form a tape-shaped prepreg.

2. The process according to claim 1, wherein said tape-shaped reinforcing fiber bundles arranged not to be touched each other are formed by providing a gap between adjacent tape-shaped reinforcing fiber bundles, said gap being preferably in the thickness direction of each tape-shaped reinforcing fiber bundle before and/or after said introduction step (1).

3. The process according to claim 1, wherein said tape-shaped reinforcing fiber bundles arranged not to be touched each other are formed by adjoining tape-shaped reinforcing fiber bundles to one another in the width direction of each tape-shaped reinforcing fiber bundle, before and/or after said introduction step (1).

4. The process according to anyone of the claims 1 to 3, wherein, in said lamination step (4), a plurality of spread tape-shaped reinforcing fiber bundles (31) impregnated or/and to be impregnated with said thermoset resin (23) are laminated sequentially at positions different from each other in said running direction of said tape-shaped reinforcing fiber bundles (31).

5. The process according to anyone of the claims 1 to 3, wherein, in said lamination step (4), a plurality of spread tape-shaped reinforcing fiber bundles (31) impregnated or/and to be impregnated with said thermoset resin (23) are laminated, simultaneously at a predetermined position in said running direction of said tape-shaped reinforcing fiber bundles (31).

6. The process according to claim 5, wherein said predetermined position is disposed just before or at said fixing step (5).

7. The process according to anyone of claims 1 to 6, wherein a fixing step (5) is set after said lamination step (3) and the width of said impregnated tape-shaped laminate is fixed through said second die (41).

8. The process according to claim 7, wherein the corner (43) of inlet of said cavity (42) is rounded.

9. The process according to claim 7 or 8, wherein the temperature of said first die or first set of dies (19) is different from that of said second die (41).

10. The process according to anyone of claims 7 to 9, wherein the second die or second set of dies (41) comprises a cavity (42) the thickness of is smaller than that of said impregnated and laminated reinforcing bundles (31) at the end of said first die of set of dies (19).

11. The process according to claim 10, wherein said thickness of said cavity (42) divided by the number of laminated tape-shaped reinforcing fiber bundles (31) is less than 0.3mm.

12. An apparatus for producing a tape-shaped prepreg comprising reinforcing fibers and a thermoset resin wherein the volume fraction of said reinforced fiber is in the range of 45 to 65%, said apparatus comprising:
introducing means (11) for introducing a plurality of tape-shaped reinforcing fiber bundles (10) into a first die (19),
one or more spreading means (13) for spreading said plurality of tape-shaped reinforcing fiber bundles (10),
a first die or set of dies (19) for laminating said plurality of tape-shaped reinforcing fibers, said first die or set of dies (19) comprising a resin supply for contacting said plurality of tape-shaped reinforcing fibers and a thermoset resin (23) having a viscosity in the range of 1 to 300 Pa·s,
said spreading means (13) being arrange to spread said plurality of tape-shaped reinforcing fiber bundles (10) before and/or after said first die or set of dies (19),
separating means (32,33) for separating said tape-shaped reinforcing fiber bundles and arranging said tape-shaped reinforcing fiber bundles not to touch each other until they reach said resin supply, said separating means (32,33) being arranged to introduce said tape-shaped reinforcing fiber bundles into said first die or first set of die (19),
a second die or set of dies (41) fixing the width of the impregnated tape-shaped laminate, said second die or set of dies (41) being placed at the end of or after said first die or first set of dies (19), to form a tape-shaped prepreg, and
a tape-shaped prepreg comprising a plurality of reinforcing fiber bundles uniformly continuously impregnated by said thermoset resin.

13. The apparatus according to claim 12, wherein said second die or set of dies (41) comprising a cavity (42) for running impregnated tape-shaped laminate into said cavity (42), said cavity (42) having one or more parts or corners (43) possibly in contact with said impregnated tape-shaped laminate that are not angular, and preferably that are round.

14. A tape-shaped prepreg comprising a plurality of reinforcing fiber bundles, and uncured or semi-cured thermoset resin, wherein said thermoset resin has a viscosity in the range of 1 to 300 Pa.s before curing, wherein the volume fraction of said reinforced fiber is in the range of 45 to 65% relative to the total volume of the prepreg, and wherein said reinforcing fiber bundles are totally impregnated by said thermoset resin, preferably said tape-shaped prepreg being obtainable according to a process as defined in any one of claims 1 to 11.

15. A manufactured article formed by a tape-shaped prepreg as defined in claim 14.
